# EUROPEAN PATENT APPLICATION

(11) **EP 4 506 716 A1**
(43) Date of publication of application: **12.02.2025**
(21) Application number: 23190903.7
(22) Date of filing: 10.08.2023
(51) Int. Cl.: G01S 7/02, G01S 7/292, G01S 7/35, G01S 13/58

(54) **APPARATUS, RADAR SYSTEM AND METHOD**

(71) Applicant: Infineon Technologies AG, 85579 Neubiberg (DE)
(72) Inventor: WILL, Christoph Jürgen, 81673 München (DE); KIESSLING, Michael, 85356 Freising (DE)
(74) Representative: 2SPL Patentanwälte PartG mbB

(57) **Abstract**

It is proposed an apparatus (100) comprising processing circuitry (110) configured to obtain radar data indicative of a radar signal of a first radar sensor (130). The processing circuitry is further configured to determine an amount of samples of interest present in the radar data. The samples of interest have a value which fulfills a predetermined criterion relative to a predetermined amplitude threshold. The processing circuitry is further configured to determine at least one of a presence of an interference of a second radar sensor (140) with the first radar sensor and a presence of a target in a field of view of the first radar sensor based on the amount of samples of interest detected in the radar data.

## Description

### Field

The present disclosure relates to radar signal processing. Examples relate to an apparatus, a radar system and a method.

### Background

When multiple radar sensors operate in proximity, interferences between the radar sensors can occur. These interferences can result in false or undetected targets. They can significantly affect the reliability and performance of radar-based detection. Hence, there is a demand for an improved differentiation between interferences and true targets.

### Summary

This demand is satisfied by the subject-matter of the independent claims.

Some aspects of the present disclosure relate to an apparatus, comprising processing circuitry configured to obtain radar data indicative of a radar signal of a first radar sensor, determine an amount of samples of interest present in the radar data, the samples of interest having a value which fulfills a predetermined criterion relative to a predetermined amplitude threshold, and determine at least one of a presence of an interference of a second radar sensor with the first radar sensor and a presence of a target in a field of view of the first radar sensor based on the amount of samples of interest detected in the radar data.

Some aspects of the present disclosure relate to a method, comprising obtaining radar data indicative of a radar signal of a first radar sensor, determining an amount of samples of interest present in the radar data, the samples of interest having a value which fulfills a predetermined criterion relative to a predetermined amplitude threshold, and determining at least one of a presence of an interference of a second radar sensor with the first radar sensor and a presence of a target in a field of view of the first radar sensor based on the amount of samples of interest detected in the radar data.

### Brief description of the Figures

Some examples of apparatuses and/or methods will be described in the following by way of example only, and with reference to the accompanying figures, in which
Fig. 1 illustrates an example of an apparatus;
Figs. 2a to 2d illustrate diagrams of examples of an amplitude of a radar signal for different interference and target scenarios;
Fig. 3a and Fig. 3b illustrate diagrams of examples of an amount of samples of interest and a differentiation between target and interference based on the amount of samples of interest;
Fig. 4 illustrates an example of a radar system; and
Fig. 5 illustrates an example of a method.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

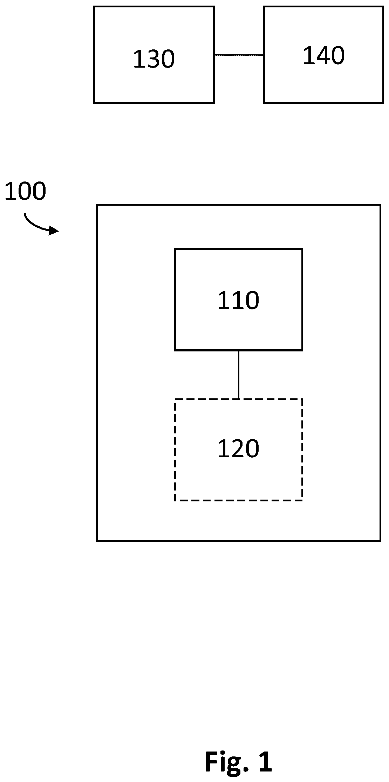

**Fig. 1** illustrates an example of an apparatus 100. The apparatus 100 comprises processing circuitry 110 and optionally interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110. The interface circuitry 120 may further be configured to establish a (e.g., wired or wireless) signal connection to a first radar sensor 130 or to a data storage storing radar data of the first radar sensor 130 in order to receive the radar data.

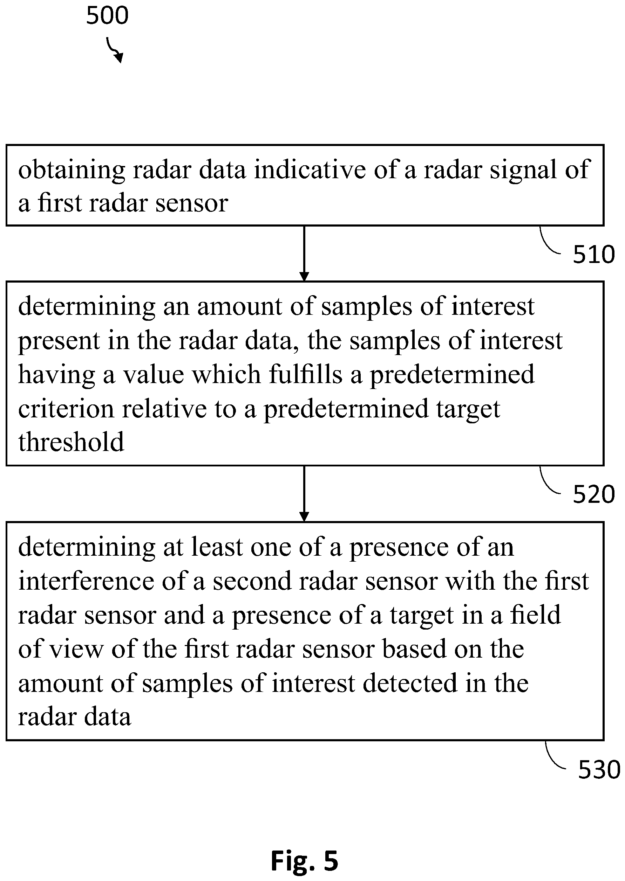

The apparatus 100 may be external to the radar sensor 130 and communicatively coupled to it or to said data storage. As an alternative to the example of Fig. 1, the apparatus 100 may be (e.g., partially or fully) integrated into the radar sensor 130. The apparatus 100 may be part of a radar system comprising the radar sensor 130, such as explained below with reference to Fig. 5. In case, the apparatus 100 is integrated into the radar sensor 130, the apparatus 100 may dispense with the interface circuitry 120.

The interface circuitry 120 may be any device or means for communicating or exchanging data. For instance, the interface circuitry 120 may be a set of electronic components, circuits, and/or subsystems for interaction between different interfacing entities such as devices, systems, or components. It may comprise voltage level shifters, buffers, amplifiers, filters, converters, multiplexers, demultiplexers, and/or various other electronic elements.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

The processing circuitry 110 is configured to obtain radar data indicative of a radar signal of the first radar sensor 130. The processing circuitry 110 may, for example, receive the radar data via the interface circuitry 120 or may directly access the radar data in case the processing circuity 110 is integrated into the first radar sensor 130. Additionally or alternatively, the processing circuitry 110 may determine or generate the radar data, e.g., by receiving the radar signal or a signal derived thereof and sampling said signal using an analog-to-digital converter (ADC).

The first radar sensor 130 may be any electronic device for emitting and receiving a radio frequency signal, i.e., a radar transceiver. The first radar sensor 130 is configured to receive the radar signal and optionally generate radar data based on the received radar signal. For instance, the first radar sensor 130 may include a transmitter which generates and emits an electromagnetic wave in the radio frequency band (a radar emit signal) towards a field of view of the first radar sensor 130, and a receiver which captures the above radar signal (radar receive signal) emanating from the field of view. The radar signal may include echoes or reflections from the radar emit signal reflected off from objects in the field of view. The radar data may, e.g., indicate an intermediate frequency signal, baseband signal or a Doppler shift signal derived from the radar receive signal and a reference frequency signal. The radar data may indicate samples of said signal, each comprising amplitude and/or phase information about the signal at a specific point in time.

However, the radar data may be impaired by a so-called interference of a second, different radar sensor 140 with the first radar sensor 130. The second radar sensor 140 (of same or different type like the first radar sensor 130) may operate at a same or similar radio frequency in the vicinity of the first radar sensor 130. An emission of radar signals (interference signals) by the second radar sensor 140 may cause false targets in the radar data or falsely trigger a motion detection in the analysis of the radar data generated by the first radar sensor 130 in case the radiation of the second radar sensor 140 is mistaken for an echo of the radar emit signal of the first radar sensor 130. The interference may in some cases "blind" the first radar sensor 130, i.e., a valid target or target motion is not at all or not properly detectable anymore. For example, the interfering signal of the second radar sensor 140 may be so strong, e.g., when the radar sensors are close to each other, that, during the interference, a target (motion) signature in the recorded radar data is covered or overlaid by the interference signal signature. Generally, the interference signal may disturb an operation of the first radar sensor 130.

The interference or disturbance may, e.g., occur sporadically depending on a clocking of the first radar sensor 130 and/or the second radar sensor 140. For example, both or one of the radar sensors 130, 140 may be a pulsed Doppler radar sensor or a frequency modulated continuous wave (FMCW) radar sensor. The first radar sensor 130 (victim) may alternatively be an always-on Doppler radar sensor, then sporadic interference may still occur if the second radar sensor 140 (aggressor) is duty-cycled. The interference at the victim may be detected, when at the time of sampling the aggressor is on. If both radar sensors 130, 140 are duty-cycled, both may be able to detect an interference of the respective other radar sensor based on the technique described herein. Both radar sensors may have a respective RC oscillator to provide the clocking of radar pulses. For two RC oscillators, the clocks may be asynchronous (running independently from each other) or at least not precisely synchronous, for which reason interferences may occur frequently but only for a very short time.

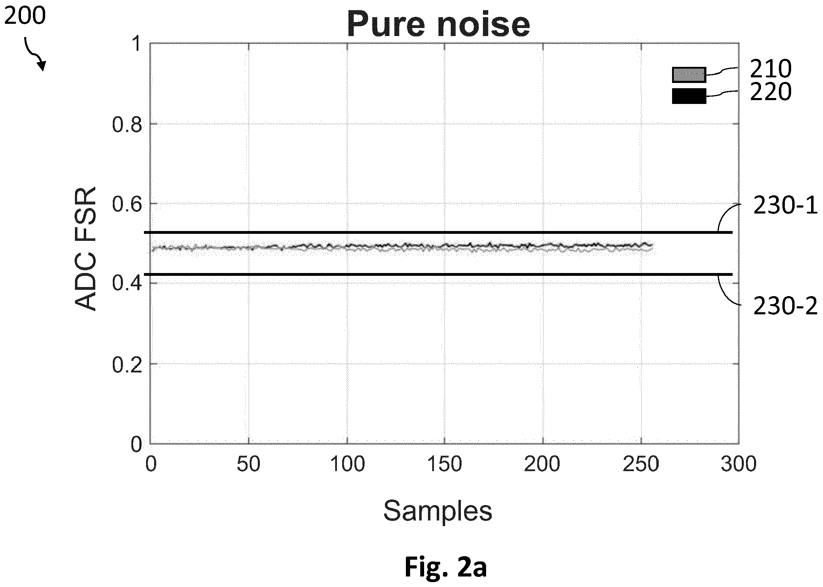

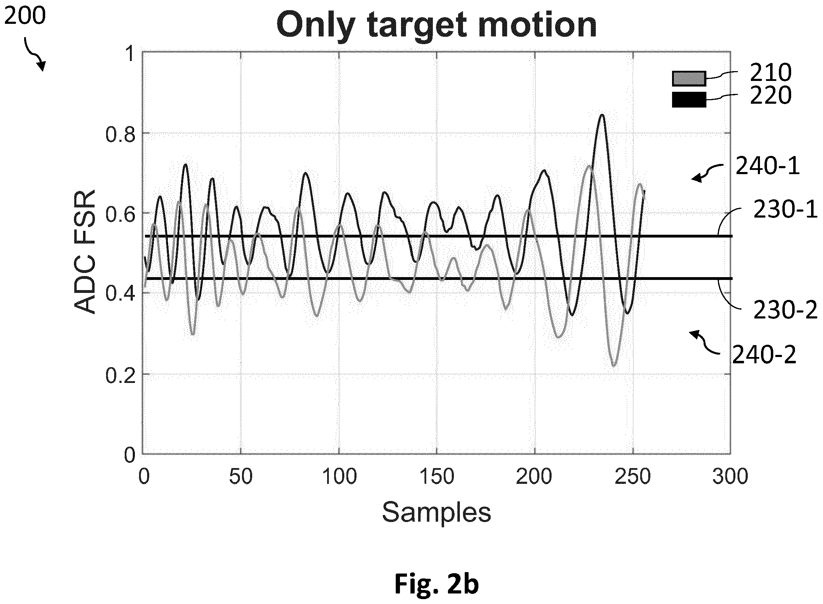

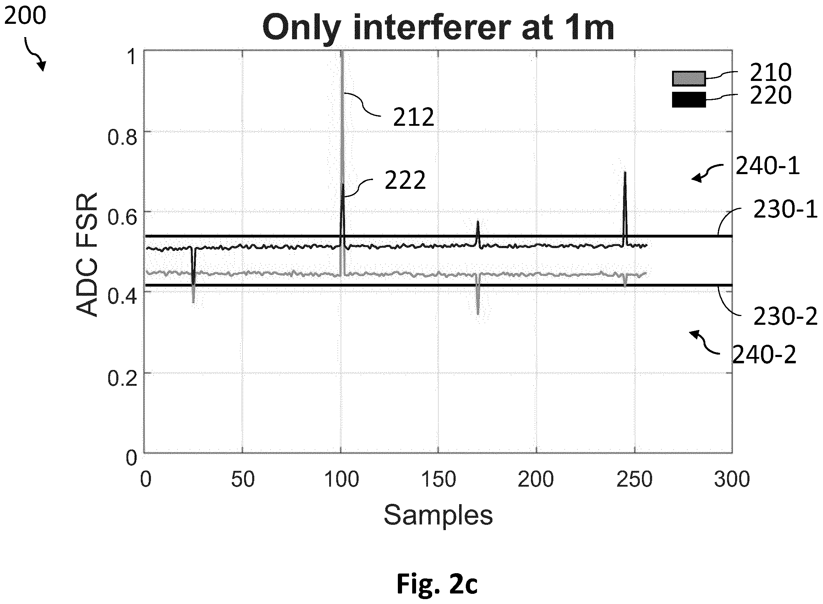

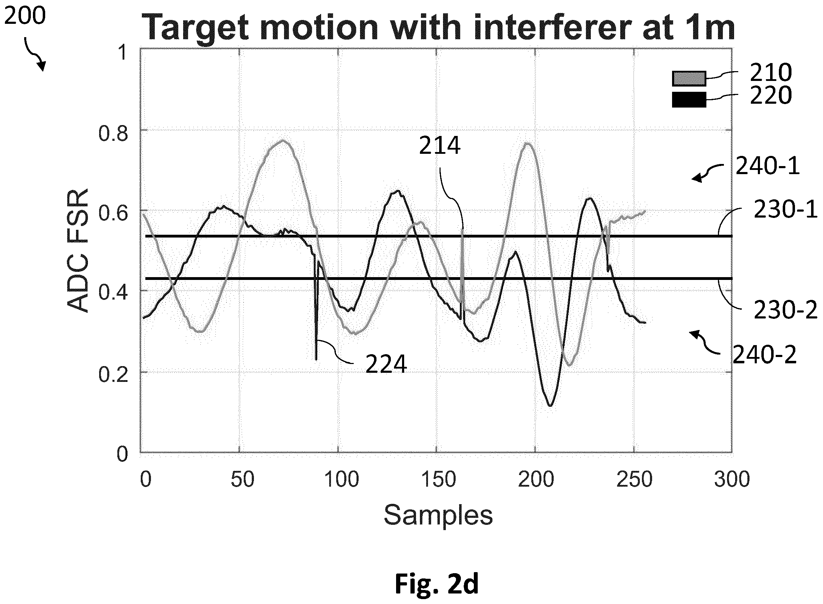

An example of how an interference may affect a radar signal of a (first) radar sensor is illustrated by Fig. 2a to Fig. 2d. **Fig. 2a** to **Fig. 2d** show examples of diagrams 200 of an amplitude of a radar signal over time for noise only (Fig. 2a), only a target present in a field of view of the radar sensor (Fig. 2b), only an interference present (Fig. 2c) and both, a target and an interference, present in the field of view of the radar sensor (Fig. 2d). The diagrams 200 show an amplitude (in an ADC full-scale range) of I and Q samples 210 and 220 of the radar signal (in a timely order), respectively.

The diagrams 200 show measurements with the first radar sensor (victim) being a pulsed Doppler radar sensor (Doppler radar sensor in pulse mode, duty-cycled Doppler radar sensor) with an RC oscillator exhibiting a frequency of 11,05 Megahertz. The interference is caused by a second radar sensor (aggressor) which is a pulsed Doppler radar sensor based on an RC oscillator with a frequency of 11,21 Megahertz. The second radar sensor has a distance of about 1 meter to the first radar sensor. Both radar sensors operate with a pulse width of 10 microseconds and a pulse repetition time of 1000 microseconds. The first radar sensor is configured to have a time duration per frame of 300 milliseconds and a number of samples per frame of 256 (sample rate: 1 kilohertz). The target scenarios (Fig. 2b, Fig. 2d) are set up with a person approaching the first radar sensor in walking speed.

In Fig. 2a, the I and Q samples 210, 220 exhibit only small variations around 0,5 of the full-scale range caused by noise. In Fig. 2b, the I and Q samples 210, 220 exhibit a sinusoidal pattern of relatively smooth signal deflections in both directions starting from 0,5 of the full-scale range caused by a target or target motion. In Fig. 2c, the I and Q samples 210, 220 exhibit sporadic outliers, such as outliers 212 and 222, in only one or few consecutive samples standing out from a mainly constant noise floor, caused by an interference. In Fig. 2d, the I and Q samples 210, 220 generally exhibit a sinusoidal pattern but with sporadic outliers, such as outliers 214 and 224, caused by simultaneous capture of a target and interference.

Conventionally, outliers caused by interference, e.g., outliers 212 and 222, would be wrongly interpreted as a target, or if interference samples are simply discarded, a target such as in the example of Fig. 2d would not be detected in presence of an interference.

By contrast, the apparatus 100 of Fig. 1 may improve a detection and/or mitigation of interferences and false targets. Further, the apparatus 100 may enable a differentiation between interference and a true target.

The processing circuitry 110 is configured to determine an amount (number) of samples of interest present in the radar data. The samples of interest have a value which fulfills a predetermined criterion relative to a predetermined amplitude threshold. For instance, the samples of interest may indicate an amplitude with a value or slope which fulfills the predetermined criterion. For example, samples exceeding a noise floor or being located outside a value interval of noise in the radar signal may be considered samples of interest. The noise value interval may be determined heuristically, e.g., by trial and error for a specific target application or by statistical evaluation of random samples generated with a known interference/target scenario.

The predetermined criterion may specify a mathematical relation between the value of a sample and the amplitude threshold. If the mathematical relation is determined to be true, said sample is considered a sample of interest (or not). For example, the predetermined criterion may specify that the value has to, e.g., exceed, fall below or be equal to the amplitude threshold or exhibit a certain value difference to the amplitude threshold to classify the corresponding sample as sample of interest. The amplitude threshold may comprise two amplitude thresholds marking the upper and lower limit of a value interval in which the samples of noninterest fall (i.e. the samples which are determined not to be samples of interest), e.g., a negative valued threshold and a positive valued threshold or one threshold above and one below a reference (e.g., mean or median) amplitude value.

In the examples illustrated by Fig. 2a to Fig. 2d, a first amplitude threshold 230-1 and a second amplitude threshold 230-2 are shown. The thresholds 230-1, 230-2 are set to 0,55 and 0,45 of the ADC full-scale range, respectively. In the examples of Figs. 2a to Fig. 2d, all I and Q samples 210, 220 which have an amplitude above the first amplitude threshold 230-1 or below the second amplitude threshold 230-2 are considered samples of interest 240-1 and 240-2. All samples between the two thresholds 230-1, 230-2 may be considered samples of noninterest.

In the case of noise only (Fig. 2a), no samples of interest are present. In the case of target motion only (Fig. 2b), the sinusoidal oscillations exceed at least one of the thresholds 230-1, 230-2, i.e., a large part of the crests and troughs of the sinusoidal oscillations are above or below the thresholds 230-1, 230-2. Consequently, in the radar data shown in Fig. 2b, a high number of samples of interest 240-1, 240-2 is to be expected.

In the case of interference only (Fig. 2c), the rare outliers such as outliers 212, 222 exceed the thresholds 230-1, 230-2 which will thus be considered samples of interest 240-1, 240-2. A small number of samples of interest 240-1, 240-2 is to be expected in this case. In the case of interference and target motion (Fig. 2d), outliers (e.g., outliers 214, 224) caused by interference as well as the oscillations caused by the target motion exceed the thresholds 230-1, 230-2. Hence, both the outliers and the oscillations will lead to samples of interest 240-1, 240-2, yielding a high number of samples of interest 240-1, 240-2.

In other examples than shown in Fig. 2a to Fig. 2d, there may be any number of amplitude thresholds, e.g., only one amplitude threshold (e.g., above a noise floor or below the noise floor), one or two respective amplitude thresholds for I and Q samples or alike. Further, the concrete value of the amplitude thresholds 230-1, 230-2 of Fig. 2a to Fig. 2d are meant for illustrative purposes only. In other examples, the amplitude threshold(s) may be set to any other value. The amplitude threshold(s) may be, e.g., determined heuristically for the target application.

Additionally or alternatively, the processing circuitry 110 may be configured to determine an absolute value of a sample of the radar data and determine that said sample is a sample of interest in response to determining that the absolute value of said sample exceeds the predetermined amplitude threshold. For instance, unlike it is shown in Fig. 2a to Fig. 2d, offset-removed samples may be taken as a basis, as explained further below. The samples may then deviate from a zero line to negative or positive values. In such cases, determining an absolute value may simplify the detection of samples of interest: only one amplitude threshold may be needed - this amplitude threshold may mark a negative and positive difference to the zero line at the same time. For instance, a value of a sample to be checked has to exceed this difference for the sample to be considered a sample of interest.

The processing circuitry 110 may be configured to determine the number of samples of interest through determining how many samples of the radar data have a value fulfilling the predetermined criterion, e.g., exceeding (and/or falling below) the amplitude threshold. That is, the processing circuitry 110 may determine the number of samples of interest by counting the occurrences of such samples.

The number of samples of interest may, for instance, be determined for one or more frames of samples or a predetermined number of consecutive samples. In other words, determining the quantity of samples of interest may be associated with a specific count of radar data frames or samples. A frame refers to a specific time window during which a certain number of samples are collected. The processing circuitry 110 may, for instance, determine (e.g., count) the number of samples of interest in a first frame, store the value and/or use it for further processing, as explained below. The processing circuitry 110 may then determine the number of samples of interest for a second frame and use it likewise for further radar data analysis. In this manner, the number of sample of interest may be continuously updated for one selected frame after another.

In case of a frame-wise counting of samples of interest, the processing complexity may be decreased since other analysis of the radar data such as averaging out random noise may be in frames, too. The determination of the number of samples may focus on either a single or multiple, e.g., successive frames. Alternatively, the processing circuitry 110 may take a set count of (e.g., consecutive) samples as basis, e.g., regardless of their position within frames, and count the samples of interest among these samples. This may be beneficial for continuous monitoring of the environment of the radar sensor or reduced latency since the processing circuitry 110 doesn't need to wait for a complete frame to be collected before initiating analysis. The counting may also be terminated in case the number of samples of interest exceeds a certain target threshold. Generally, the technique described herein may provide the adaptability of the radar signal processing to different target applications in choosing whether samples and/or frames are analyzed.

The processing circuitry 110 is further configured to determine at least one of a presence of an interference of the second radar sensor 140 with the first radar sensor 130 and a presence of a target in a field of view of the first radar sensor 130 based on the amount of samples of interest detected in the radar data. The processing circuitry 110 may, for example, determine whether the amount of samples of interest indicates presence of a target or an exclusive presence of an interference. A certain low number of samples of interest (e.g., per frame) above the noise floor may indicate outliers or spikes in the radar data and, thus, indicate presence of an interference. For a true target or target motion, a large amount of samples of interest may be expected.

In this way, the apparatus 100 may provide a signal processing technique to improve the mitigation of interferences and their effect in the radar data analysis. The proposed technique may be based on an outlier detection to deal with (self-) interference among RC oscillator-based radar sensors, e.g., pulsed Doppler and/or FMCW radar sensors.

A target threshold may be set for evaluating the amount of samples of interest. For example, the processing circuitry 110 may be further configured to determine that a target is present in response to determining that at least one of the amount of samples of interest and a ratio of the amount of samples of interest relative to a predetermined amount of samples in the radar data fulfills one or more predetermined first criterion relative to a target threshold. That is, thresholding may be applied to the amount of samples of interest. The target threshold may be determined heuristically for the target application and/or depending on the number of samples per frame, the clocking of the first radar sensor 130, the sampling rate etc. The amount of samples or the ratio may be considered indicative for a target if it exceeds (e.g., is above) the target threshold. Regardless of the interference, the apparatus 100 may be capable of detecting a target correctly using the target threshold, thus, the blinding of the first radar sensor 130 may be prevented.

For the ratio, the amount of samples of interest may be related to the number of samples within a frame of the radar data generated by the first radar sensor 130, for instance. In this way, the amount of samples may be convertible to a percentage value which is more universally applicable for different use cases of the apparatus 100 - thus, the target threshold does not necessarily have to be adjusted if, e.g., a number of samples per frame is changed.

Optionally, several frames may be jointly processed for evaluating whether the target is present or not. For example, the first criterion may have to be fulfilled for at least a predefined number of consecutive frames of the radar data. For instance, only if each frame of the consecutive frames or if a predefined number of frames of the consecutive frames indicates that the first criterion is fulfilled (e.g., that the amount of samples of interest in said frame exceeds the target threshold), presence of a target is assumed. Optionally, a sliding window may be applied to a certain number y ≥ 2 of consecutive frames: final determination that a target motion is present may be output only if at least x ≥ 1 (e.g., 2) frames of the y (e.g., 5) consecutive frames fulfill the first criterion. By jointly processing blocks of frames, e.g., by averaging or fusing information from neighboring frames, the apparatus 100 may compensate for randomly occurring interference-caused outliers within one frame and accurately differentiate between interference and true target.

Additionally or alternatively, interference may be explicitly searched for. For example, the processing circuitry 110 may be configured to determine that the interference of the second radar sensor 140 is present and that no target is present in response to determining that at least one of the amount of samples of interest and a ratio of the amount of samples of interest relative to a predetermined amount of samples in the radar data fulfills one or more predetermined second criterion relative to a target threshold. For instance, the second criterion may consist in the amount of samples of interest being more than 0 but smaller than the target threshold. This may be advantageous to take further measures in case interference is detected - for example, output a warning signal, change an operation mode of the first radar sensor 130 for interference mitigation, or alike.

Interference and target detection may, in some examples, be combined: For instance, as a first step, the respective amount of samples of interest are determined in each frame of a certain number of consecutive frames using an amplitude threshold TH1. In a second step, the processing circuitry 110 may determine whether the amount of samples of interest or a ratio (percentage) of the amount of samples per samples of a frame fulfills a certain first or second criterion relative to the target threshold TH2. A third step may be the evaluation of the output of the second step: Interference may be considered to be present if the number/percentage of samples of interest fulfills the second criterion (e.g., if it is more than 0 but smaller than TH2), which might be an optional output of the apparatus 100. A target or target motion may be considered to be detected if the number/percentage of samples of interest fulfill the first criterion (e.g., if it is greater as or equal to TH2).

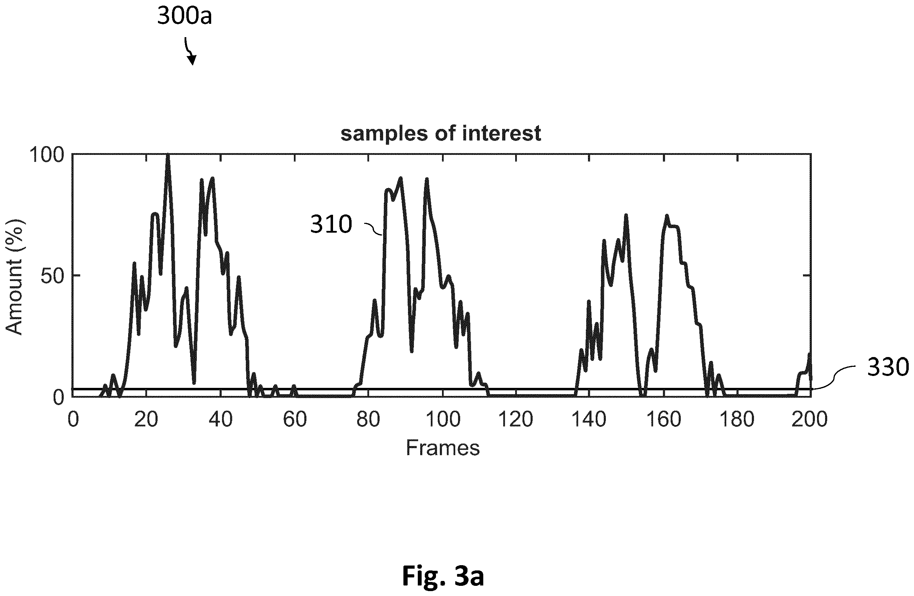

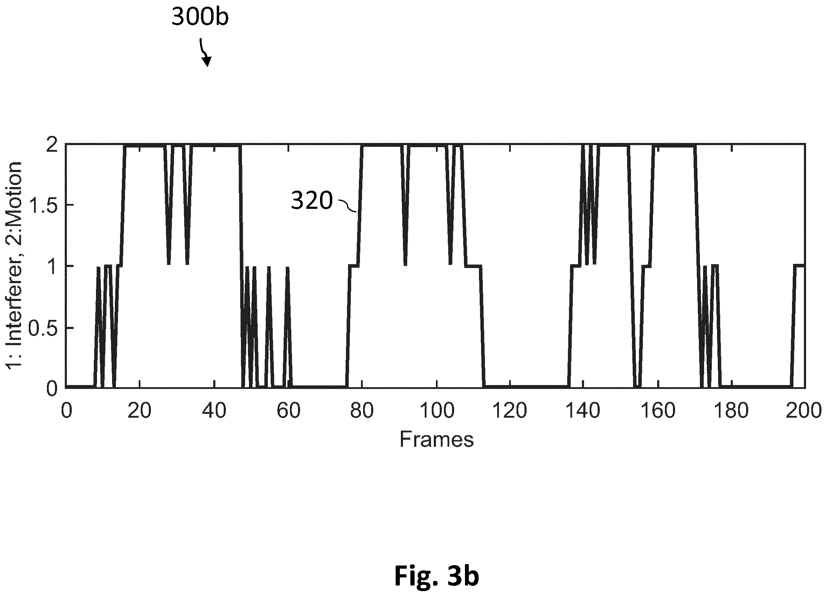

An example of such an interference/target detection is illustrated by Fig. 3a and Fig. 3b. **Fig. 3a** and **Fig. 3b** show an example of a first diagram 300a and a second diagram 300b, respectively. The first diagram 300a illustrates a ratio 310 of an amount of samples of interest per a total number of samples per frame in percentage over 200 frames of radar data. The second diagram 300b illustrates an output 320 of the interference/target detection for the ratio 310 of the first diagram 300a. The output 320 is set to be 1 if only interference is detected and to be 2 if a target motion is detected. In the example of Fig. 3a and Fig. 3b, a target threshold 330 is set to be 5%. For frames with the ratio 310 for said frame being greater than 0 and smaller than the target threshold 330, "interference only" is assumed. For frames with the ratio 310 in said frame being greater than the target threshold 330, presence of a target motion is assumed. Fig. 3a and Fig. 3b show that in presence of an interference, the target motion can still be detected, and in case of interference only, false targets are suppressed.

Referring back to Fig. 1, for keeping the complexity of the data processing performed by the apparatus 100 low, the radar data may optionally be kept in a raw data state or undergo only few modifications. For instance, an I-Q representation of the radar data may be directly used to determine the amount of samples of interest. In such cases, the processing circuitry 110 may be configured to determine a respective amount of samples of interest for I samples and Q samples of the radar data. The processing circuitry 110 may then determine the at least one of the presence of an interference and the presence of a target based on the amount of samples of interest determined for the I samples and the Q samples. The evaluation of the amount of samples may be independently performed for I samples and Q samples, e.g., if at least one of the I samples and the Q samples or only if both the I samples and the Q samples indicate presence of a target, then the final evaluation may be that a target is present. Alternatively, the respective amount of samples of interest of both the I samples and the Q samples may be jointly processed, e.g., the amounts may be summed up to a total amount of samples of interest, and this total amount may be evaluated using a target threshold.

In some examples, the processing circuitry 110 may be configured to determine the amount of samples of interest in a baseband signal of the radar signal. For instance, the radar data may indicate the baseband signal. The baseband signal refers to a signal obtained by, e.g., downconverting or mixing the radar signal that is received by the first radar sensor 130. For instance, the baseband signal may represent a conversion of the radio-frequency radar signal into a lower frequency signal. The baseband signal may be a time-domain representation of the radar signal. The baseband signal may comprise information about a signal strength (amplitude) of the radar signal and a phase or Doppler shift of the radar signal.

The processing circuitry 110 may optionally pre-process (a digital representation of) the baseband signal to improve the interference and/or target detection. For example, the processing circuitry 110 may be configured to remove or attenuate an (amplitude) offset of the baseband signal and determine the number of samples of interest using the amplitude threshold in the offset-removed baseband signal. That is, the number of samples of interest may be determined from samples of modified radar data indicating the offset-removed baseband signal. This may enable the usage of an absolute value of the samples for determining whether said sample is a sample of interest. In this way, only one value for the amplitude threshold has to be set instead of providing an upper and lower limit marking samples of interest. Thus, the pre-processing may simplify the sample evaluation.

The processing circuitry 110 may use any offset removal or attenuation technique. For instance, the processing circuitry 110 may be configured to determine the offset through determining at least one of a median value of the baseband signal, a mean value of the baseband signal, a median value of a predefined number of samples (e.g., the first z ≥ 2 samples or the first 3 or 5 samples) of the baseband signal and a mean value of an analog-to-digital-converter (ADC) output of the first radar sensor 130. The offset may be determined for each frame of the baseband signal, for instance. The processing circuitry 110 may then, e.g., subtract the determined offset from the amplitude of the samples. In case of individual I/Q processing, the processing circuitry 110 may subtract an individual (respective) offset from the corresponding I samples or Q samples of the baseband signal.

In summary, the apparatus 100 may decrease false motion detection of the first radar sensor 130 caused by other radar sensors 140 operating in the same frequency region. This may improve the performance of the target application of the first radar sensor 130, lower the power consumption of a radar system coupled to the first radar sensor 130 which is not permanently falsely woken up, and enable the undisturbed usage of multiple radar sensors, e.g., in the same room or location.

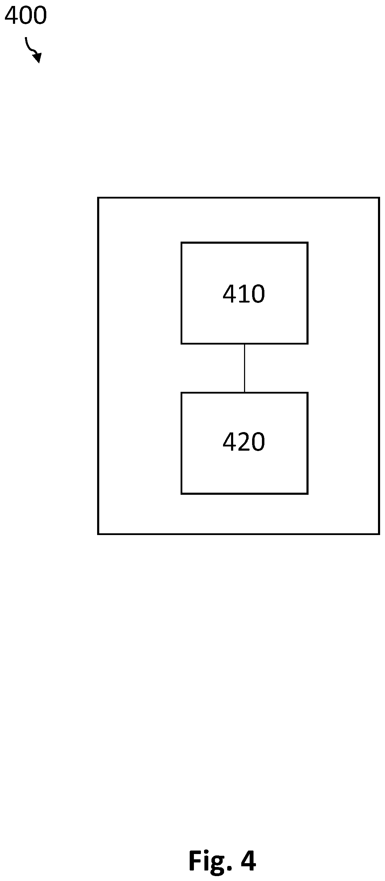

**Fig. 4** illustrates an example of a radar system 400. The radar system 400 comprises an apparatus 410 as described herein, such as apparatus 100, and the first radar sensor 420. The first radar sensor 420 is configured to receive the radar signal and generate the radar data based on the received radar signal.

Although the apparatus 410 and the first radar sensor 420 are depicted as separate blocks in Fig. 4, in other examples, the apparatus 410 may in part or in entirety be included in the first radar sensor 420, which thus correspondingly includes all or part of the processing circuitry (e.g., processing circuitry 110) of the apparatus 410.

In case the apparatus 410 is only partially included in the first radar sensor 420, the radar system 400 may include distributed processing circuitry carrying out respective parts of the processing steps, e.g., in the form of first processing (sub-) circuitry included in the first radar sensor 420, and second processing (sub-) circuitry external to the sensor and in communication with the first processing circuitry through interface circuitry (e.g., interface circuitry 120), for instance, for exchange of data between the first and the second processing circuitry.

In case the apparatus 410 is integrated in the first radar sensor 420, the processing circuitry and the first radar sensor 420 may be jointly integrated in a single semiconductor chip, or in more than one semi-conductor chip.

In case the apparatus 410 is not included in the first radar sensor 420, the processing circuitry may take the form of processing circuitry external to the first radar sensor 420 and may be communicatively coupled therewith through interface circuitry.

The first radar sensor 420 may be a Doppler radar sensor in pulse mode (pulsed Doppler radar sensor, duty-cycled Doppler radar sensor), for instance. That is, the radar sensor 420 may be a Doppler radar sensor (e.g., emitting substantially a single frequency radiation) which is not continuously on, instead it emits short "pulses" when a sample is required to save power. The radar sensor 420 may, thus, be duty-cycled, i.e., have a duty cycle (ratio between pulse duration or pulse width and the period or pulse repetition interval) of less than 1. In such a radar sensor, (short-duration) radar pulses are transmitted, e.g., in bursts or packets. These radar pulses are reflected off objects in the radar's field of view, including stationary and moving targets. The first radar sensor 420 then receives the reflected signals (echo) and generates a radar (receive) signal based on the received echo. By analyzing the Doppler shift of the returned signals, it may determine the velocity of targets relative to the first radar sensor 420.

The radar system 400 may determine the presence of persons based on a velocity signature in the radar signal, for instance.

The first radar sensor 420 may alternatively be an always-on Doppler radar sensor, then sporadic interference may occur if a second, different radar sensor (aggressor) is duty-cycled. The interference at the first radar sensor 420 may be detected, when at the time of sampling the second radar sensor is on. If both radar sensors are duty-cycled, both may be able to detect an interference of the respective other radar sensor based on the technique described herein.

The first radar sensor 420 may comprise an optional RC oscillator configured to output a clock signal for emitting the radar signal. A pulse repetition interval of the radar signal may be based on the clock signal. That is, the clock signal may provide the timing for the pulse repetition interval. For instance, a start of the pulse repetition interval may be set by counting a predefined number of pulses (e.g., falling or rising edges) of the clock signal.

The radar system 400 may further comprise main processing circuitry external to the processing circuitry of the apparatus 410. For example, the processing circuitry of the apparatus 410 may trigger an activation or wake-up of the main processing circuitry if a target or target motion is detected. The main processing circuitry may then perform further and more complex processing of the radar data like Fourier transformations or alike.

More details and aspects of the radar system 400 are explained in connection with the proposed technique or one or more examples described above, e.g., with reference to Fig. 1. The radar system 400 may comprise one or more additional optional features corresponding to one or more aspects of the proposed technique, or one or more examples described above.

**Fig. 5** illustrates an example of a method 500. The method 500 may be performed by an apparatus as described herein, such as apparatus 100. The method 500 comprises obtaining 510 radar data indicative of a radar signal of a first radar sensor and determining 520 an amount of samples of interest present in the radar data. The samples of interest have a value which fulfills a predetermined criterion relative to a predetermined amplitude threshold. The method 500 further comprises determining 530 at least one of a presence of an interference of a second radar sensor with the first radar sensor and a presence of a target in a field of view of the first radar sensor based on the amount of samples of interest detected in the radar data.

More details and aspects of the method 500 are explained in connection with the proposed technique or one or more examples described above, e.g., with reference to Fig. 1. The method 500 may comprise one or more additional optional features corresponding to one or more aspects of the proposed technique, or one or more examples described above.

In the following, some examples of the proposed technique are presented:
An example (e.g., example 1) relates to an apparatus, comprising processing circuitry configured to obtain radar data indicative of a radar signal of a first radar sensor, determine an amount of samples of interest present in the radar data, the samples of interest having a value which fulfills a predetermined criterion relative to a predetermined amplitude threshold, and determine at least one of a presence of an interference of a second radar sensor with the first radar sensor and a presence of a target in a field of view of the first radar sensor based on the amount of samples of interest detected in the radar data.
Another example (e.g., example 2) relates to a previous example (e.g., example 1) or to any other example, further comprising that the processing circuitry is further configured to determine that a target is present in response to determining that at least one of the amount of samples of interest and a ratio of the amount of samples of interest relative to a predetermined amount of samples in the radar data fulfills one or more predetermined first criterion relative to a target threshold.
Another example (e.g., example 3) relates to a previous example (e.g., one of the examples 1 or 2) or to any other example, further comprising that the processing circuitry is configured to determine that the interference of the second radar sensor is present and that no target is present in response to determining that at least one of the amount of samples of interest and a ratio of the amount of samples of interest relative to a predetermined amount of samples in the radar data fulfills one or more predetermined second criterion relative to a target threshold.
Another example (e.g., example 4) relates to a previous example (e.g., example 2) or to any other example, further comprising that the first criterion is to be fulfilled for at least a predefined number of consecutive frames of the radar data.
Another example (e.g., example 5) relates to a previous example (e.g., one of the examples 1 to 4) or to any other example, further comprising that the processing circuitry is configured to determine the number of samples of interest through determining how many samples of the radar data have a value exceeding the amplitude threshold.
Another example (e.g., example 6) relates to a previous example (e.g., one of the examples 1 to 5) or to any other example, further comprising that the processing circuitry is configured to determine an absolute value of a sample of the radar data and determine that said sample is a sample of interest in response to determining that the absolute value of said sample exceeds the predetermined amplitude threshold.
Another example (e.g., example 7) relates to a previous example (e.g., one of the examples 1 to 6) or to any other example, further comprising that the processing circuitry is configured to determine a respective amount of samples of interest for I samples and Q samples of the radar data.
Another example (e.g., example 8) relates to a previous example (e.g., one of the examples 1 to 7) or to any other example, further comprising that the processing circuitry is configured to determine the amount of samples of interest in a baseband signal of the radar signal.
Another example (e.g., example 9) relates to a previous example (e.g., example 8) or to any other example, further comprising that the processing circuitry is configured to remove or attenuate an offset of the baseband signal and determine the number of samples of interest using the amplitude threshold in the offset-removed baseband signal.
Another example (e.g., example 10) relates to a previous example (e.g., example 9) or to any other example, further comprising that the processing circuitry is configured to determine the offset through determining at least one of a median value of the baseband signal, a mean value of the baseband signal, a median value of a predefined number of samples of the baseband signal and a mean value of an analog-to-digital-converter output of the first radar sensor.
An example (e.g., example 11) relates to a radar system, comprising the apparatus of any one of the previous examples, and the first radar sensor, wherein the first radar sensor is configured to receive the radar signal and generate the radar data based on the received radar signal.
Another example (e.g., example 12) relates to a previous example (e.g., example 11) or to any other example, further comprising that the first radar sensor is a Doppler radar sensor.
Another example (e.g., example 13) relates to a previous example (e.g. example 11 or 12), further comprising that the first radar sensor comprises an RC oscillator configured to output a clock signal for emitting the radar signal.
An example (e.g., example 14) relates to a method, comprising obtaining radar data indicative of a radar signal of a first radar sensor, determining an amount of samples of interest present in the radar data, the samples of interest having a value which fulfills a predetermined criterion relative to a predetermined amplitude threshold, and determining at least one of a presence of an interference of a second radar sensor with the first radar sensor and a presence of a target in a field of view of the first radar sensor based on the amount of samples of interest detected in the radar data.
Another example (e.g., example 15) relates to a non-transitory machine-readable medium having stored thereon a program having a program code for performing the method of example 14, when the program is executed on a processor or a programmable hardware.
Another example (e.g., example 16) relates to a program having a program code for performing the method of example 14, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100), comprising processing circuitry (110) configured to:
obtain radar data indicative of a radar signal of a first radar sensor (130);
determine an amount of samples of interest (240-1, 240-2) present in the radar data, the samples of interest (240-1, 240-2) having a value which fulfills a predetermined criterion relative to a predetermined amplitude threshold (230-1, 230-2); and
determine at least one of a presence of an interference of a second radar sensor (140) with the first radar sensor (130) and a presence of a target in a field of view of the first radar sensor (130) based on the amount of samples of interest (240-1, 240-2) detected in the radar data.

2. The apparatus (100) of claim 1, wherein the processing circuitry (110) is further configured to determine that a target is present in response to determining that at least one of the amount of samples of interest (240-1, 240-2) and a ratio of the amount of samples of interest (240-1, 240-2) relative to a predetermined amount of samples in the radar data fulfills one or more predetermined first criterion relative to a target threshold (330).

3. The apparatus (100) of any one of the previous claims, wherein the processing circuitry (110) is configured to determine that the interference of the second radar sensor (140) is present and that no target is present in response to determining that at least one of the amount of samples of interest (240-1, 240-2) and a ratio of the amount of samples of interest (240-1, 240-2) relative to a predetermined amount of samples in the radar data fulfills one or more predetermined second criterion relative to a target threshold (330).

4. The apparatus (100) of claim 2, wherein the first criterion is to be fulfilled for at least a predefined number of consecutive frames of the radar data.

5. The apparatus (100) of any one of the previous claims, wherein the processing circuitry (110) is configured to determine the number of samples of interest (240-1, 240-2) through determining how many samples of the radar data have a value exceeding the amplitude threshold (230-1, 230-2).

6. The apparatus (100) of any one of the previous claims, wherein the processing circuitry (110) is configured to determine an absolute value of a sample of the radar data and determine that said sample is a sample of interest in response to determining that the absolute value of said sample exceeds the predetermined amplitude threshold (230-1, 230-2).

7. The apparatus (100) of any one of the previous claims, wherein the processing circuitry (110) is configured to determine a respective amount of samples of interest (240-1, 240-2) for I samples and Q samples of the radar data.

8. The apparatus (100) of any one of the previous claims, wherein the processing circuitry (110) is configured to determine the amount of samples of interest (240-1, 240-2) in a baseband signal of the radar signal.

9. The apparatus (100) of claim 8, wherein the processing circuitry (110) is configured to remove or attenuate an offset of the baseband signal and determine the number of samples of interest (240-1, 240-2) using the amplitude threshold (230-1, 230-2) in the offset-removed baseband signal.

10. The apparatus (100) of claim 9, wherein the processing circuitry (110) is configured to determine the offset through determining at least one of a median value of the baseband signal, a mean value of the baseband signal, a median value of a predefined number of samples of the baseband signal and a mean value of an analog-to-digital-converter output of the first radar sensor (130).

11. A radar system (400), comprising:
the apparatus (410) of any one of the previous claims; and
the first radar sensor (420), wherein the first radar sensor (420) is configured to receive the radar signal and generate the radar data based on the received radar signal.

12. The radar system (400) of claim 11, wherein the first radar sensor (420) is a Doppler radar sensor.

13. The radar system (400) of any one of claims 11 or 12, wherein the first radar sensor (420) comprises an RC oscillator configured to output a clock signal for emitting the radar signal.

14. A method (500), comprising:
obtaining (510) radar data indicative of a radar signal of a first radar sensor;
determining (520) an amount of samples of interest (240-1, 240-2) present in the radar data, the samples of interest (240-1, 240-2) having a value which fulfills a predetermined criterion relative to a predetermined amplitude threshold (230-1, 230-2); and
determining (530) at least one of a presence of an interference of a second radar sensor with the first radar sensor and a presence of a target in a field of view of the first radar sensor based on the amount of samples of interest (240-1, 240-2) detected in the radar data.

15. A non-transitory machine-readable medium having stored thereon a program having a program code for performing the method of claim 14, when the program is executed on a processor or a programmable hardware.
